# EUROPEAN PATENT SPECIFICATION

(11) **EP 2 180 523 B1**
(45) Date of publication and mention of the grant of the patent: **03.04.2013**
(21) Application number: 09013287.9
(22) Date of filing: 21.10.2009
(51) Int. Cl.: H01L 31/042

(54) **A roof with an integrated solar panel**
Dach mit integriertem Solarpaneel
Toit avec panneau solaire intégré

(30) Priority: 21.10.2008 NL 1036093
(43) Date of publication of application: 28.04.2010
(73) Proprietor: Stafier Solar Systems B.V., 6902 PC Zevenaar (NL)
(72) Inventor: Beijer, Ruben Theodoor, 7007 Je Doetinchem (NL); Terwiel, Andreas Johannes Gerhardus, 48446 Elten (Emmerich) (DE)
(74) Representative: Baeten, Ernest

(56) References cited:
- EP-A- 0 588 619
- EP-A- 0 646 682
- EP-A- 0 949 686
- JP-A- 11 001 999
- US-A- 5 524 401
- US-A- 6 018 123

## Description

The present invention relates to a roof comprising a roof boarding, roof tiles arranged on said roof boarding and at least one roof panel provided with a solar panel of the BIPV type, comprising a casing having a bottom plate and upright side walls and a solar panel which extends above said bottom plate, spaced therefrom by some distance, and which substantially closes said casing, said at least one roof panel comprising at least one air inlet opening and at least one air outlet opening so as to enable an air flow under the solar panel, and said roof being provided with ventilation enhancing means designed to enhance the discharge of air from said at least one air outlet opening. The abbreviation BIPV stands for "Building Integrated PhotoVoltaic", which means that the panel is mounted on the roof in place of roof tiles. When the air flow over the roof is oriented from the ridge of the roof to the gutter, the air outlet opening can function as an air inlet opening, and the ventilation enhancing means can enhance the supply of air to said air inlet opening.

It is known to install a roof panel provided with a solar panel in a tile roof in place of roof tiles. In that case a roof panel is installed which is built up of a casing that is covered by a solar panel at the upper side.

From EP 0 646 682 there is known a roof with trusses, on which a roof panel provided with a solar panel is mounted. The trusses are spaced from the bottom plate of the panel by some distance, and recesses are provided in the trusses, through which recesses air can flow. The panel extends over the entire height of the roof.

Documents EP 0 646 682 A and JP 11001999 disclose configurations for solar roofs.

The object of the present invention, according to a first aspect thereof, is to provide a roof and precisely recited in claim 1, comprising a solar panel as described in the opening paragraph the preamble of which solar panel can be readily built into a tile roof and which need not extend over the entire height of the roof. This object is accomplished by the present invention in that said at least one roof panel comprises contours which conform to those of the roof tiles surrounding said at least one roof panel. Existing roof panels provided with a solar panel have a uniform edge configuration and do not have a contour that conforms to the contours of the roof tiles. Since the circumferential edge of the roof panels according to the present invention has a contour which conforms to that of the surrounding roof tiles, the roof panels can be installed in a simple manner when the roof is being covered, or be built into an existing roof. It is also readily possible to install several roof panels above and/or beside each other, because the contours of adjacent roof panels are configured to conform to each other as well. Because of the simple manner of installing the roof panels, the investment in a solar panel for a house with a tiled roof will be lower and the solar panel will yield a higher return than the existing solar panels. Adapting the contour of a roof panel to a tiled roof seems to be a laborious solution, because in practice different roof tiles, frequently with different contours, are used, so that one or a few uniform roof panels will not suffice. A roof panel according to the present invention, however, has the advantage that the ventilation and the protection against the ingress of rain water into the tiled roof remain substantially unchanged for the roof, whilst laborious joining and sealing operations are not needed. Not only does this have a cost-saving effect, but it also reduces the time required for installing a roof panel.

According to the invention, an air inlet opening and an air outlet opening are provided. Which one of the two functions as the air outlet opening and which one functions as the air inlet opening may depend on the direction of the wind. Unless stated otherwise, the present document will describe the situation in which the air outlet opening is located on the ridge side of the roof. At the bottom edge of the roof panel, i.e. the side facing the roof-gutter, an opening is present between the bottom of the casing and the solar panel, which opening places the interior of the casing and the ambient air into open communication with each other. It will be understood that it is an inherent feature of a tiled roof that openings are present between the tiles thereof. Through said openings, air which flows into the space between the roof boarding and the tiled roof, for example from the roof panel, can flow out, but insofar as this could be interpreted as ventilation, the ventilation enhancing means according to the present invention typically relate to means capable of enhancing any ventilation between the roof tiles in comparison with a known tiled roof. The provision of ventilation enhancing means may also comprise the provision of openings through which air can readily flow out and/or increasing the draught through existing or additional openings. A few examples of this will be elucidated in the paragraphs below. As a result of an improved ventilation, the temperature of the solar panel will run up less high, especially when the sun is shining, than in the case of a comparable roof panel not having such ventilation. Since the temperature runs up less high, the solar panel will produce more energy in a comparable situation than without the ventilation-enhancing means. Thus, the object of the first aspect of the invention is accomplished.

As there will usually be an air flow from the gutter towards the ridge, it is preferable if the ventilation means are provided in the roof at a location higher than said at least one roof panel, or at least higher than the ventilation enhancing means in said at least one roof panel. The ventilation enhancing means are thus located downstream of the roof panels, so that the ventilation will be optimally enhanced.

The ventilation enhancing means are preferably provided at a distance of at most one metre from said at least one roof panel. In general the rule applies that the smaller the distance between the ventilation enhancing means and a roof panel, the more optimally the ventilation will be enhanced. The ventilation enhancing means may be provided directly adjacent to the upper roof panel or adjacent to a row of tiles arranged adjacent to the roof panel.

In a preferred embodiment of the invention, the ventilation enhancing means comprise a ventilation tile. A ventilation tile can be readily installed in place of a roof tile originally placed or to be placed above a roof panel.

It is preferable in that regard if said ventilation tile is provided with a ventilation opening which, in use, is at least substantially directed towards the ridge of the roof. Known ventilation tiles, which, incidentally, are generally used for other purposes than for cooling a solar panel, have a ventilation opening which, in use, is directed towards the gutter, so as to prevent rain water from finding its way into the ventilation opening. Although this is also possible in this preferred embodiment of the roof tile with the ventilation opening that faces towards the ridge of the roof, the risk of leakage of rain water is limited. In the first place, rain water can be directed through the ventilation opening to the metal casing of the roof panel and flow away over the tiled roof via the air inlet opening at the bottom side. This can be taken into account in the design of the roof panel and/or the ventilation tile. It is not objectionable for that matter if some rain water gets between the roof tiles and the roof boarding. Normally, a roof is designed to cope with such an amount of water and will thus not become leaky.

Alternatively, the ventilation enhancing means comprise an elongated roof element which is provided with a ventilation opening or with a series of ventilation openings extending transversely to the roof. The elongated roof element may be embodied in various ways, for example as a strip to be installed between the upper side of a roof panel and the row of tiles thereabove, which strip is provided with a through hole or with a series of through holes which place(s) the interior of the upper roof panel into communication with the outside air, possibly via the space between the roof boarding and the roof covering. In a preferred embodiment of the present invention, the ventilation enhancing means comprise a roof panel with an upper panel which resembles a solar panel. Said roof panel may be provided with means for leading pipes or cables therethrough. The roof panel may also have an upper panel that resembles roof tiles.

According to another possibility, the ventilation enhancing means open under the roof boarding. Thus, air heated under the solar panel can be led into a house for heating the house.

When at least two roof panels positioned one above the other in the roof are provided with communication means via which enable fluid communication between said at least two roof panels, an air flow can take place via the air inlet opening from the lower one of the two roof panels, through said communication means, to the upper one of the two roof panels. If the upper one of the two roof panels is also provided with an air inlet opening, the air from the lower roof panel will mix with "fresh" outside air when air flows into the space between the bottom plate and the solar panel in the roof panel through the air inlet opening of the upper one of the two roof panels as well.

It is preferable in that regard if said at least two roof panels partially overlap, and if the respective roof panels are provided with at least partially aligned communication openings in the overlapping parts. This is a very simple way of providing an air flow channel through two or more roof panels positioned one above another. After all, the casing of the upper one of the two roof panels overlaps part of the casing of the lower one of the at least two roof panels. Holes in the bottom of the upper roof panel may for example be provided at a location which, in use, overlaps a space between the upright upper edge and the solar panel of the lower roof panel.

Alternatively, at least two roof panels arranged one above the other in the roof are provided with air outlet openings which open into the space between the roof covering and the roof boarding. Thus, each roof panel has its own air outlet opening into the space between the roof covering on the one hand and the roof boarding on the other hand, and the air from the air outlet openings of the various roof panels collects between the roof boarding and the roof covering, which roof covering may be made up of roof panels and/or roof tiles.

The present invention will be explained in more detail hereinafter with reference to the figures, in which:
Figure 1a shows a first embodiment of a roof according to the present invention;
Figure 1b is a more detailed view of part A in figure 1;
Figure 1c is a cross-sectional view along the line I-I in figure 1a;
Figure 1d shows detail views of parts B, C and D in figure 1c;
Figure 2 shows a second embodiment of a roof according to the present invention;
Figure 3a shows a third embodiment of a roof according to the present invention;
Figure 3b is a cross-sectional view along the line III-III in figure 3a; and
Figure 3c shows detail views of parts B and C in figure 2a.

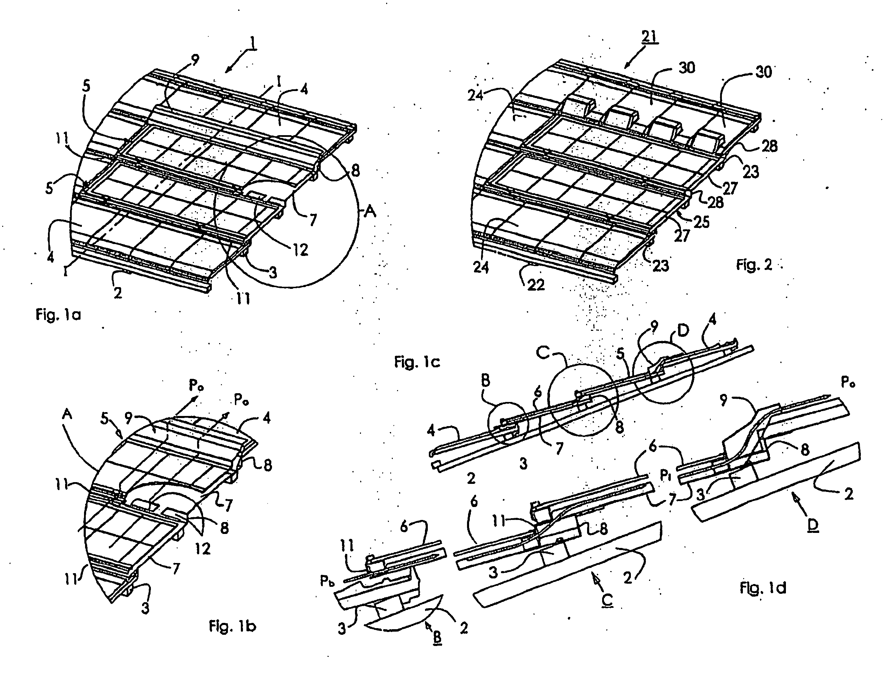

With reference to figures 1a-1d, there is shown a part of a roof according to the present invention. The roof 1 comprises a roof boarding with counter battens 2 and battens 3, on which tiles 4 and roof panels 5 are arranged. The roof panels 5 are made up of a metal casing with a bottom 7 and upright walls, of which only the upper upright wall 8 is shown in figures 1a and 1b. An air outlet opening 11 is present at the bottom side of the panel 5, between the solar panel 6 and the bottom 7. This does not obtain as far as the lowermost row of tiles is concerned, where the presence of air inlet openings in the bottom would only lead to leakage of rain water on the roof boarding. The solar panel 6 is left out in figures 1a and 1b so as to provide a better perception of the operation of the roof panel 5. Furthermore, part of the upper roof panel is cut away, so that air outlet openings 12 in the part of the lower roof panel that is overlapped by the upper roof panel are visible. Provided between the upper roof panel 5 and the first row of tiles 4 above said panel is a ventilation strip 9. In figure 1d, lines Pb, Pi and Po show a ventilation air flow that flows from an opening 11 in the lower roof panel through the roof panels 5 and then through the ventilation strip 9 through the panels 5 and then exits the panels 5 through the ventilation strip.

Referring now to figure 2, there is shown an alternative embodiment of a roof 21 with a roof boarding of counter battens 22 and battens 23. Tiles 24 are present below and beside the roof panels 25, the solar panel of which roof panels is not shown. The tiles 24 and the roof panels 25 are oriented relative to each other as if the roof panels 25 were large roof tiles. The roof panels 25 comprise a metal casing, only the bottom 27 and the upright rear wall 28 of which are shown in figure 2. A row of so-called ventilation tiles 30 is arranged adjacent to the upper roof panel 25 at the upper side thereof.

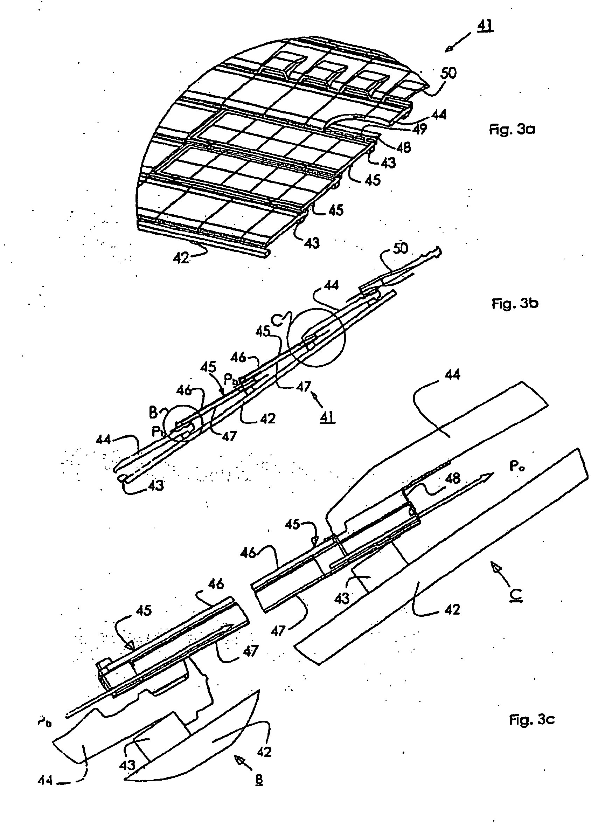

Referring now to figures 3, there is shown a third embodiment of a roof 41 according to the present invention. The roof 41 comprises a roof boarding of counter battens 42 and battens 43. Tiles 44 and roof panels 45 are arranged on the battens 43. The solar panel 46 is not shown in figure 3a for the sake of clarity of explanation. The roof panels 45 comprise a solar panel 46 and a metal casing, the bottom 47 and the upright rear wall 48 of which are shown in figures 3. The upright wall 48 is provided with ventilation openings 49. A row of tiles 44 is arranged adjacent to the upper side of the upper roof panel 45, part of which row is cut away for the sake of clarity of explanation. Above said row, a row of ventilation tiles 50 is arranged. In figures 3b and 3c, arrows Pb and Po indicate air inlet flows and air outlet flows, respectively, through the roof panels 45.

Referring now to figures 1a-1d, there is shown a first embodiment of a roof 1 according to the present invention. Two roof panels 5 are installed in the roof 1. The roof panels 5 have contours that conform to those of the tiles 4 surrounding the roof panels 5. As such, the roof panels 5 may be regarded as wide tiles. The roof panels 5 are attached to battens 3. For the sake of clarity of explanation, the roof panels 6 present at the upper side of the roof panels 5 are not shown in figures 1a and 1b. In addition, a part of the upper roof panel 5 that overlaps the lower roof panel 5 is cut away for the same reason. When the sun shines on the solar panel 6, the solar panel 6 converts solar energy into electric energy in a manner which is known per se. The solar panel 6 is heated and air which is trapped between the solar panel 6 and the casing in which the solar panel 6 is accommodated is likewise heated. It is known to those skilled in the art that the (electric) energy output of a solar panel decreases when the temperature of the solar panel increases. The roof panels 5 are provided with air inlet openings 11 and air outlet openings 12 for generating a ventilating air flow through the roof panel 5. The ventilating air flow takes place through the roof panels 5 in the manner indicated by the arrows Pb, Pi and Po. To ensure that air from the upper roof panel 5 can be discharged into the environment without much resistance, a ventilation strip 9 is provided between the upper roof panel 5 and the next row of tiles above said roof panel. Said ventilation strip 9 places the interior of the upper panel 5 into communication with the outside air. Since the strip 9 opens into the environment at a higher level than the upper surface of the tiles 4, an underpressure is generated near the opening in the strip 9 when wind blows over the upper surface of the roof 1. Thus, the opening in the strip 9 reduces the flow resistance, and the underpressure that is thus generated enhances the air flow Po from the interior of the roof panel 5.

With reference to figure 2, there is shown an alternative embodiment of a roof according to the present invention. In figure 2, elements corresponding to elements shown in figure 1 are indicated by the same reference numerals, incremented by 20, as the corresponding elements in figure 1. In the embodiment that is shown in figure 2, the strip 9 has been substituted for ventilation tiles 30. The effect of the ventilation tiles 30 is similar to the effect of the stip 9. An advantage of a ventilation tile 30 is that it affects the structure of the roof less than does the strip 9. An advantage of the strip 9 over the ventilation tiles 30 is that the communication between the interior of a roof panel and the outside air can take place over substantially the entire width of a roof panel.

With reference now to figures 3, another alternative embodiment of a roof 41 according to the present invention is shown. In figures 3, elements corresponding to elements shown in figure 1 are indicated by the same reference numerals incremented by 40, as the corresponding element in figure 1. A difference between the embodiment shown in figures 3 and the previously discussed embodiments is that the roof panels of figures 3 are not in communication with each other. Instead, each roof panel 45 has an inlet flow Pb and an outlet flow Po, the latter flow terminating in the space between the roof covering (roof panels and tiles) on the one hand and the roof boarding 42 on the other hand. A row of traditional tiles 44 is arranged above the roof panels 45, above which a row of ventilation tiles as known per se is arranged. When air is blown in through the ventilation tiles, an underpressure is generated between the upper roof panel 45 and the ventilation tiles 50. This underpressure enhances the outlet flow Po from the roof panels 45.

It will be understood that many variants, which may or may not be obvious to those skilled in the art, are possible within he scope of the present invention, which is defined in the appended claims. The embodiments as shown and discussed herein do not have a limitative effect in this regard. Thus, the contours of the tiles in the figures are straight. It is also possible to adapt roof panels according to the present invention to curved tiles, or to a different length and/or width of the tiles in question. Furthermore it is possible to use a ventilation roof panel, for example, in place of the ventilation tiles or the ventilation strip, which ventilation roof panel may be provided with controls, however, for passing cables or the like therethrough. Furthermore, a passage to the interior of the building may be used as a ventilation enhancing means. In that case air that has been heated in the roof panel can be led into the building for heating the building. Mechanical ventilation means may be used, whether or not in combination with the ventilation enhancing means as shown and discussed herein.

## Claims

1. A roof (1) comprising a roof boarding (2,3 ; 22,23 ; 42,43) roof tilles arranged on said roof boarding and at least one roof panel (5;25;45) provided with a solar panel (6; 46) of the BIPV type, comprising a casing having a bottom plate (7;27;47) upright side walls and a solar panel which extends above said bottom plate, spaced therefrom by some distance, and which substantially closes said casing, said at least one roof panel comprising at least one air inlet opening (11) and at least one air outlet (12) opening so as to enable an air flow (Ph, Pi, Po) under the solar panel, and said roof being provided with ventilation enhancing means (9 ; 30; 50) designed for enhancing the discharge of air from said at least one air outlet opening, **characterised in that** said at least one roof panel comprises contours which conform to those of the roof tiles surrounding said at least one roof panel in such a way that the circumferential edge of the roof panel has a contour which conforms to that of the surrounding files.

2. A roof according to claim 1, further **characterised in that** the ventilation means are provided in the roof at a location higher than said at least one roof panel, or at least higher than the ventilation enhancing means in said at least one roof panel.

3. A roof according to claim 1 or 2, further **characterised in that** the ventilation enhancing means are provided at a distance of at most one metre from said at least one roof panel.

4. A roof according to one or more of the preceding claims, further **characterised in that** the ventilation enhancing means comprise a ventilation tile.

5. A roof according to claim 5, further **characterised in that** said ventilation tile is provided with a ventilation opening which, in use, is at least substantial directed towards the ridge of the roof.

6. A roof according to one or more of claims 1 - 3, further **characterised in that** the ventilation enhancing means comprise an elongated roof element which is provided with a ventilation opening or with a series of ventilation openings extending transversely to the roof.

7. A roof according to one or more of claims 1 - 3, further **characterised in that** the ventilation enhancing means comprise a roof panel with an upper panel which resembles a solar panel.

8. A roof according to one or more of claims 1 - 3, further **characterised in that** the ventilation enhancing means open under the roof boarding.

9. A roof according to one or more of the preceding claims, further **characterised in that** at least two roof panels positioned one above the other in the roof are provided with communication means via which fluid communication between said at least two roof panels can take place.

10. A roof according to claim 9, further **characterised in that** said at least two roof panels partially overlap, and that the respective roof panels are provided with at least partially aligned communication openings in the overlapping parts.

11. A roof according to one or more of claims 1 - 8, further **characterised in that** at least two roof panels arranged one above the other in the roof are provided with air outlet openings which open into the space between the roof covering and the roof boarding.

## Patentansprüche

1. Dach (1) mit einer Dachschalung (2, 3; 22, 23; 42, 43), auf der Dachschalung angeordneten Dachziegeln und wenigstens einer mit einem Solarmodul (6; 46) vom BIPV-Typ versehenen Dachplatte (5; 25; 45), die ein Gehäuse, das eine Bodenplatte (7; 27; 47) und aufrechte Seitenwände hat, und ein Solarmodul umfasst, das sich mit etwas Abstand von der Bodenplatte oberhalb von dieser erstreckt und das Gehäuse im Wesentlichen schließt, wobei die wenigstens eine Dachplatte wenigstens eine Lufteinlassöffnung (11) und wenigstens eine Luftaustrittsöffnung (12) umfasst, um eine Luftströmung (Ph, Pi, Po) unter dem Solarmodul zu ermöglichen, und das Dach mit lüftungsfördernden Mitteln (9; 30; 50) versehen ist, die so ausgebildet sind, dass sie die Luftableitung aus der wenigstens einen Luftaustrittsöffnung steigern, **dadurch gekennzeichnet, dass** die wenigstens eine Dachplatte Konturen aufweist, die denen der die wenigstens eine Dachplatte umgebenden Dachziegel in einer solchen Weise entsprechen, dass der umlaufende Rand der Dachplatte eine Kontur hat, die der der umliegenden Ziegel entspricht.

2. Dach nach Anspruch 1, weiterhin **dadurch gekennzeichnet, dass** die Lüftungsmittel an einer höheren Stelle im Dach als die wenigstens eine Dachplatte oder zumindest weiter oben als die lüftungsfördernden Mittel in der wenigstens einen Dachplatte vorgesehen sind.

3. Dach nach Anspruch 1 oder 2, weiterhin **dadurch gekennzeichnet, dass** die lüftungsfördernden Mittel in einem Abstand von höchstens einem Meter von der wenigstens einen Dachplatte vorgesehen sind.

4. Dach nach einem oder mehreren der vorhergehenden Ansprüche, weiterhin **dadurch gekennzeichnet, dass** die lüftungsfördernden Mittel einen Lüftungsziegel umfassen.

5. Dach nach Anspruch 4, weiterhin **dadurch gekennzeichnet, dass** der Lüftungsziegel mit einer Lüftungsöffnung versehen ist, die im Gebrauch wenigstens im Wesentlichen zum Dachfirst hin gerichtet ist.

6. Dach nach einem oder mehreren der Ansprüche 1 - 3, weiterhin **dadurch gekennzeichnet, dass** die lüftungsfördernden Mittel ein langgestrecktes Dachelement umfassen, das mit einer Lüftungsöffnung oder mit einer Reihe von Lüftungsöffnungen versehen ist, die sich quer zum Dach erstrecken.

7. Dach nach einem oder mehreren der Ansprüche 1 - 3, weiterhin **dadurch gekennzeichnet, dass** die lüftungsfördernden Mittel eine Dachplatte mit einer oberen Platte umfassen, die einem Solarmodul ähnelt.

8. Dach nach einem oder mehreren der Ansprüche 1 - 3, weiterhin **dadurch gekennzeichnet, dass** die lüftungsfördernden Mittel sich unter der Dachschalung öffnen.

9. Dach nach einem oder mehreren der vorhergehenden Ansprüche, weiterhin **dadurch gekennzeichnet, dass** wenigstens zwei im Dach übereinander platzierte Dachplatten mit Verbindungsmitteln versehen sind, über die ein Fluidaustausch zwischen den wenigstens zwei Dachplatten erfolgen kann.

10. Dach nach Anspruch 9, weiterhin **dadurch gekennzeichnet, dass** die wenigstens zwei Dachplatten teilweise überlappen und dass die jeweiligen Dachplatten mit wenigstens teilweise aufeinander ausgerichteten Verbindungsöffnungen in den überlappenden Teilen versehen sind.

11. Dach nach einem oder mehreren der Ansprüche 1 - 8, weiterhin **dadurch gekennzeichnet, dass** wenigstens zwei im Dach übereinander angeordnete Dachplatten mit Luftaustrittsöffnungen versehen sind, die in den Raum zwischen Dachdeckung und Dachschalung münden.

## Revendications

1. Toiture (1) comprenant une sous-toiture (2, 3 ; 22, 23 ; 42, 43), des tuiles de toiture agencées sur ladite sous-toiture et au moins un panneau de toiture (5 ; 25 ; 45) pourvu d'un panneau solaire (6 ; 46) du type BIPV, comprenant un caisson ayant une plaque de fond (7 ; 27 ; 47) et des parois latérales droites et un panneau solaire qui s'étend au-dessus de ladite plaque de fond, espacé de celle-ci d'une certaine distance, et qui ferme sensiblement ledit caisson, ledit au moins un panneau de toiture comprenant au moins une ouverture d'admission d'air (11) et au moins une ouverture de refoulement d'air (12) de façon à permettre un écoulement d'air (Ph, Pi, Po) sous le panneau solaire, et ladite ouverture étant pourvue de moyens de renforcement de ventilation (9 ; 30 ; 50) conçus pour renforcer l'évacuation de l'air de ladite au moins une ouverture de refoulement d'air, **caractérisée en ce que** ledit au moins un panneau de toiture comprend des contours qui se conforment à ceux des tuiles de toiture entourant ledit au moins un panneau de toiture de telle sorte que le bord circonférentiel du panneau de toiture a un contour qui se conforme à celui des tuiles environnantes.

2. Toiture selon la revendication 1, **caractérisée en outre en ce que** les moyens de ventilation sont disposés dans la toiture à un emplacement plus haut que ledit au moins un panneau de toiture, ou au moins plus haut que les moyens de renforcement de ventilation dans ledit au moins un panneau de toiture.

3. Toiture selon la revendication 1 ou 2, **caractérisée en outre en ce que** les moyens de renforcement de ventilation sont disposés à une distance d'au plus un mètre dudit au moins panneau de toiture.

4. Toiture selon l'une ou plusieurs des revendications précédentes, **caractérisée en outre en ce que** les moyens de renforcement de ventilation comprennent une tuile de ventilation.

5. Toiture selon la revendication 4, **caractérisée en outre en ce que** ladite tuile de ventilation est pourvue d'une ouverture de ventilation qui, en utilisation, est au moins sensiblement dirigée vers le faîte de la toiture.

6. Toiture selon une ou plusieurs des revendications 1 à 3, **caractérisée en outre en ce que** les moyens de renforcement de ventilation comprennent un élément de toiture allongé qui est pourvu d'une ouverture de ventilation ou d'une série d'ouvertures de ventilation s'étendant transversalement à la toiture.

7. Toiture selon une ou plusieurs des revendications 1 à 3, **caractérisée en outre en ce que** les moyens de renforcement de ventilation comprennent un panneau de toiture avec un panneau supérieur qui ressemble à un panneau solaire.

8. Toiture selon une ou plusieurs des revendications 1 à 3, **caractérisée en outre en ce que** les moyens de renforcement de ventilation s'ouvrent sous la sous-toiture.

9. Toiture selon une ou plusieurs des revendications précédentes, **caractérisée en outre en ce qu'**au moins deux panneaux de toiture positionnés l'un par-dessus l'autre dans la toiture sont pourvus de moyens de communication par l'intermédiaire desquels peut avoir lieu une communication fluidique entre lesdits au moins deux panneaux de toiture.

10. Toiture selon la revendication 9, **caractérisée en outre en ce que** lesdits au moins deux panneaux de toiture se chevauchent partiellement, et **en ce que** les panneaux de toiture respectifs sont pourvus d'ouvertures de communication au moins partiellement alignées dans les parties chevauchantes.

11. Toiture selon l'une ou plusieurs des revendications 1 à 8, **caractérisée en outre en ce qu'**au moins deux panneaux de toiture agencés l'un par-dessus l'autre dans la toiture sont pourvus d'ouvertures de refoulement d'air qui s'ouvrent dans l'espace entre la couverture de toiture et la sous-toiture.
